# EUROPÄISCHE PATENTANMELDUNG

(11) **EP 1 288 589 A1**
(43) Veröffentlichungstag der Anmeldung: **05.03.2003**
(21) Anmeldenummer: 01126356.3
(22) Anmeldetag: 07.11.2001
(51) Int. Cl.: F24J 1/00, A61F 7/03, A47J 36/28, F28D 20/02, B01D 9/02

(54) **Aktivator zum Einleiten der Kristallisation einer wässrigen Salzlösung**

(30) Priorität: 31.08.2001 DE 20114298 U
(71) Anmelder: Katze, Peter, 59557 Lippstadt (DE)
(72) Erfinder: Katze, Peter, 59557 Lippstadt (DE)
(74) Vertreter: Strauss, H.-J., Dr.

(57) **Zusammenfassung**

Die Erfindung betrifft einen Auslöser, Aktivator bzw. Trigger zum Einleiten einer Kristallisation einer wässrigen Salzlösung, wobei der Auslöser aus einem biegbaren relativ dünnen gewölbten Metallplättchen (2) gebildet ist, mit wenigstens einem in die Fläche (3) gestanzten Schlitz (4), dessen gegenüberliegende Seiten in einer ersten gewölbten Situation des Auslösers in Berührung stehen, und wobei durch Fingerdruck mit schnappender Versetzung gegen die Wölbung sich die Seiten des Schlitzes in einer zweiten Situation sich öffnen und dadurch den Kristallisationsprozess auslösen. Zur Verbesserung der Reaktionsfähigkeit wird der Schlitz (4) mittels eines Werkzeugs derart in die Fläche (3) eingeprägt, dass das Material des Metallplättchens (2) im Schlitzbereich (8) durch eine verformende Überdehnung aufreißt oder anreißt, so dass die Seiten (5) und (6) des Schlitzes (4) Reißkanten (10) und (11) einnehmen.

## Beschreibung

Die Erfindung betrifft einen Auslöser, Aktivator bzw. Trigger oder dergleichen zum Einleiten einer Kristallisation einer wässrigen Salzlösung, wobei der Auslöser aus einem biegbaren relativ dünnen gewölbten Metallplättchen gebildet ist, mit wenigstens einem in die Fläche gestanzten Schlitz, dessen gegenüberliegende Seiten in einer ersten gewölbten Situation des Auslösers in Berührung stehen, und wobei durch Fingerdruck mit schnappender Versetzung gegen die Wölbung sich die Seiten des Schlitzes in einer zweiten Situation sich öffnen und dadurch den Kristallisationsprozess auslösen.

Aus dem Stand der Technik sind Wärmepackungen bekannt, die eine wässrige Lösung enthalten und die mittels eines Auslösers aktiviert werden können, um Wärme freizusetzen. Solche Wärmepackungen haben viele Vorteile gegenüber anderen Wärmespendern wie beispielsweise einer Heißwasserflasche oder einem erwärmten elektrischen Element wegen ihrer Tragbarkeit sowie ihrer Fähigkeit innerhalb kurzer Zeit ohne das Vorhandensein einer sekundären Versorgung Wärme zu erzeugen. Eine derartige Wärmepackung kann in ihrem flüssigen Zustand ohne weiteres transportiert werden und steht immer in kürzester Zeit zur Verfügung örtliche Wärme zu entwickeln. Ihr Einsatzgebiet ist vielfältig, wie dies beispielsweise aus Krankenhäusern, Kliniken, aber auch in Haushalten sowie bei Sport- und Freizeitaktivitäten im Außenbereich bekannt ist.

So ist aus dem Stand der Technik beispielsweise aus der US-A-4,077, 390 eine Wärmepackung bekannt, die einen flexiblen Behälter beschreibt, der mit einer wässrigen Salzlösung gefüllt ist und auch einen flexiblen Eisenmetallstreifen enthält, der durch einen oder mehrere Schlitze gekennzeichnet ist. Durch Biegen des Metallstreifens in der Lösung wird dann die Kristallisation gestartet, wobei der Schlitz so verläuft, dass die gegenüberliegenden Seiten des Risses aneinander nicht berühren oder nicht aneinander schaben, sondern letztendlich schräg verlaufen und unter einem spitzen Winkel enden. Infolge des Verbiegens des Metallstreifens stellen sich in dem Material Metallbrüche im spitzen Winkelbereich des Schlitzes ein, dass infolge dieser sich ergebender Bruchstellen der Kristallisationsprozess in Gang gesetzt wird.

Die DE 689 06 546 beschreibt einen weiteren bekannten Auslöser, Aktivator bzw. Trigger des Standes der Technik, der ebenfalls ein Metallplättchen mit einem Schlitz zum Gegenstand hat. Zur Steigerung der Reaktionsfähigkeit des Auslösers wird vorgeschlagen, die Oberfläche des Auslösers derart zu behandeln, dass sie aufgeraut wird, so dass sich eine Beschichtung von Metallfaserpartikeln bildet, die, wenn der Auslöser betätigt wird, sich von der Oberfläche lösen und in die Salzlösung eindringen, um die Kristallisation in Gang zu setzen.

Auf eine weitere Druckschrift des Standes der Technik, der EP 0 258 226 B1 wird noch verwiesen, deren Gegenstand ebenfalls ein Auslöser ist, wobei die dort beschriebene Schlitzanordnung quasi doppel-T-förmig ausgebildet ist, so dass zu dem längsverlaufenden Hauptschlitz zusätzlich zwei querverlaufende Nebenschlitze angeordnet sind, um so die Reaktionsstellen zu vervielfachen.

Bei den aus dem Stand der Technik bekannten Auslösern wird es als Problem angesehen, dass das Auslösen des Kristallisationsprozesses oftmals nur durch mehrmaliges Betätigen des Auslösers erst bewirkt wird.

Hieraus ergibt sich die der Erfindung zugrundeliegende Aufgabe, einen Auslöser, Aktivator bzw. Trigger o.dgl. zum Einleiten einer Kristallisation in einer wässrigen Salzlösung derart weiter zu bilden, der einerseits eine verbesserte gegenüber den genannten im Stand der Technik gegebene Reaktionsfähigkeit aufweist, wobei dessen Herstellung sich einfacher und kostengünstiger durchführen lässt.

Diese Aufgabe wird erfindungsgemäß dadurch gelöst, dass der Schlitz mittels eines Werkzeugs derart in die Fläche eingeprägt wird, dass das Material des Metallplättchens im Schlitzbereich durch eine verformende Überdehnung aufreißt, so dass die Seiten des Schlitzes Reißkanten einnehmen. Bei dem erfindungsgemäßen Auslöser wird das Material im Schlitzbereich nicht in der Art gestanzt, dass sich ein scharfkantiger Schlitz mit sich ergebenden glatten Kanten ergibt, sondern es wird durch einen Verformungsprozess eine Überdehnung des Materials im Schlitzbereich erzeugt, die sozusagen bis zur Streckgrenze des Materials geht, und so das Material infolge der Überbelastung reißt. So bilden sich Risskanten im Bereich des Schlitzes mit der Folge, dass die Reißkanten eine sägezahnförmige ausgefranzte Oberflächenstruktur einnehmen, an der sich lose Kleinst-Metallfaserpartikel bilden. Wird nun ein derartiges gewölbtes Metallplättchen in einer wässrigen Salzlösung aus der Wölbung herausgedrückt, so versteht es sich von selbst, dass infolge des Reißprozesses sich die Metallfaserpartikel ablösen und somit den Kristallisationsprozess in der Lösung in Gang setzen. Infolge des Reißprozesses ergibt sich eine wesentlich größere metallische Oberflächenstruktur, so dass dadurch eine gesicherte Kristallisationsauslösung gewährleistet wird.

In Weiterbildung der Erfindung sind die Reißkanten durch Rückversetzung des Metallplättchens in die erste gewölbte Situation bringbar, wobei sich infolge der sich ergebenden Reibung zwischen den Reißkanten weitere Metallfaserpartikel bilden und ablösen können. Infolge, dass im Schlitzbereich durch Überdehnung das Material nicht gänzlich aus dem Schlitz entfernt wird, ergeben sich quasi Seitenkanten, die sich gequetscht im Schlitzbereich gegenüberstehen, wobei durch das schnappende Versetzen in bzw. aus der Wölbung sich die Reißkanten gegeneinander reiben, so dass sich weitere Metallfaserpartikel bilden können, die sich wiederum ablösen und für den Kristallisationsprozess bereitstehen. Hierdurch wird die Reaktionsfähigkeit des Auslösers erheblich gesteigert.

Ein Ausführungsbeispiel der Erfindung wird an Hand der nachstehenden Figuren 1 bis 6 näher erläutert, dabei zeigen:
- Figur 01:: Eine Seitenansicht eines Auslösers in zwei Situationen;
- Figur 02:: Eine Draufsicht auf den Auslöser gem. der Figur 01 mit Schlitzanordnung;
- Figur 03:: Eine Detailansicht ebenfalls in Draufsicht einer Schlitzanordnung in der Fläche des Metallplättchens vor der schnappenden Versetzung;
- Figur 04:: Eine weitere Detailansicht ebenfalls in Draufsicht einer Schlitzanordnung in der Fläche des Metallplättchens nach der schnappenden Versetzung;
- Figur 05:: Eine geschnittene Seitenansicht durch die Schlitzanordnung in dem Metallplättchen gemäß der Schnittlinie V - V in Figur 3 und
- Figur 06:: Eine weitere geschnittene Seitenansicht durch die Schlitzanordnung in dem Metallplättchen gemäß der Schnittlinie VI - VI in Figur 4.

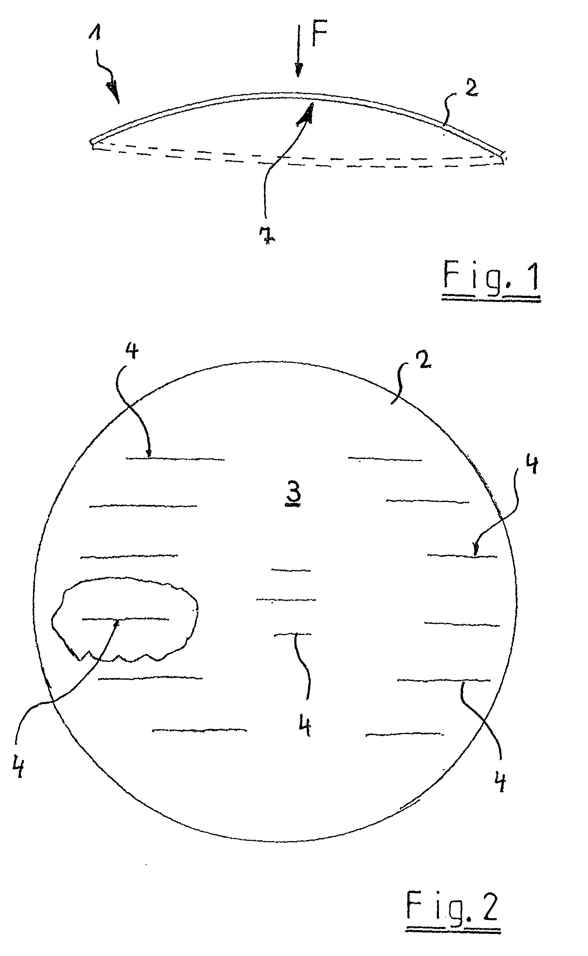

Die Figur 01 zeigt in der Seitenansicht einen Auslöser, Aktivator bzw. Trigger 1 o. dgl. zum Einleiten einer Kristallisation einer wässrigen Salzlösung. Dabei befindet sich der Auslöser 1 in der wässrigen Salzlösung, wobei diese eingefasst ist von einem flexiblen Behältnis, das ebenfalls nicht näher dargestellt ist. Der Auslöser 1 besteht dabei aus einem biegbaren relativ dünn gewölbten Metallplättchen 2, dass mit wenigstens einem in der Fläche 3 geprägten Schlitz 4 ausgestattet ist. Der Schlitz 4 weist dabei gegenüberliegende Seiten 5 und 6 auf, die in einer ersten gewölbten Situation, wie in der Figur 01 dargestellt ist, in Berührung stehen, wobei durch Fingerdruck F mit schnappender Versetzung gegen die Wölbung 7 sich die Seiten 5 und 6 des Schlitzes 4 in einer zweiten Situation, gestrichelt dargestellt, zur Salzlösung hin öffnen und so die Reaktion zur Kristallisation auslösen.

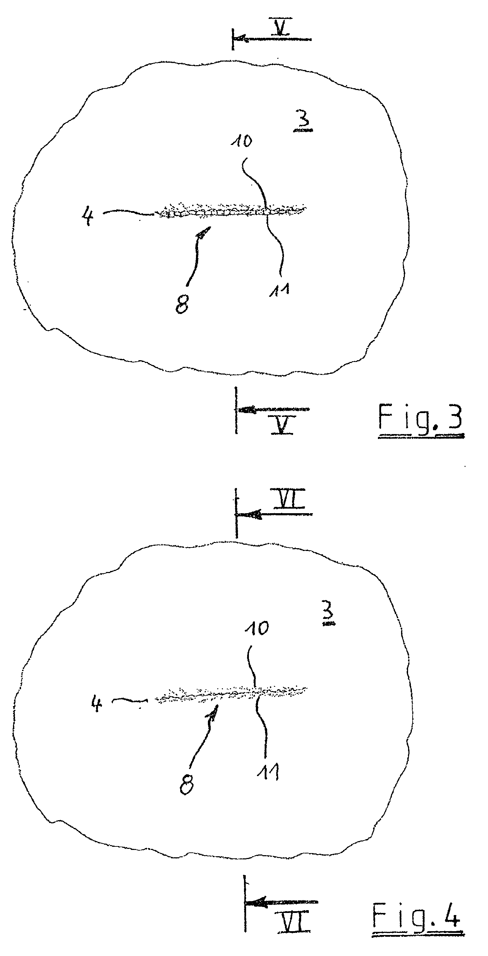

Dabei ist wie in den Figuren 03 und 04, aber auch in den Schnittansichten 05 und 06, dargestellt, der Schlitz 3 mittels eines nicht näher dargestellten Werkzeuge derart in die Fläche bzw. in das Material des Metallplättchens 2 eingeprägt, dass das Material des Metallplättchens 2 im Schlitzbereich 8 durch eine verformende Überdehnung 9 aufreißt, so dass die Seiten 5 und 6 des Schlitzes 3 Reißkanten 10 und 11 einnehmen. Dabei können die Reißkanten 10 und 11 eine sägezahnförmige ausgefranzte Oberflächenstruktur einnehmen. Die Oberflächenstruktur kann dabei infolge des Reißens lose Kleinst-Metallfaserpartikel bilden, die sich ablösen können, um so den Kristallisationsprozess zu starten.

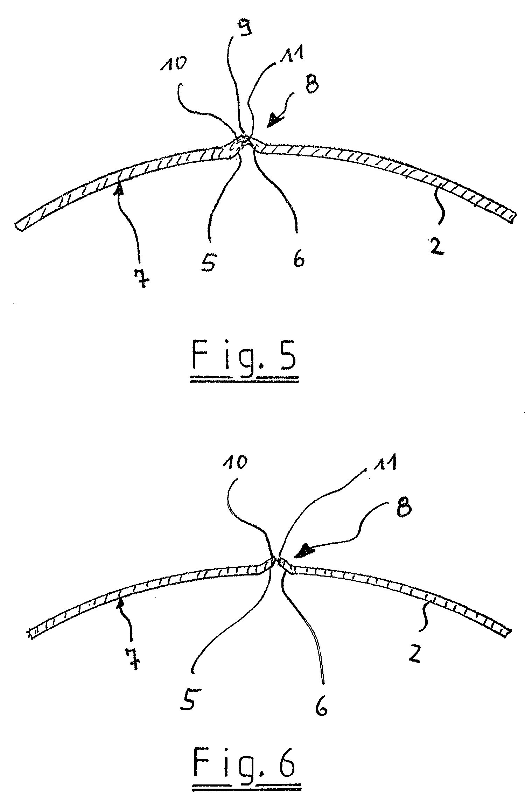

Wird die Wölbung 7 rückversetzt, dargestellt in den Figuren 4 und 6, mit der Folge dass die Reißkanten 10 und 11 in die erste Situation versetzt werden, so ergeben sich Reibungskanten, die wiederum weitere Metallfaserpartikel bilden können, wobei diese wiederum für den Kristallisationsprozess bereitstehen.

Das Herstellungsverfahren eines derartigen Auslösers 1 vollzieht sich folgendermaßen, wobei zunächst von einem Metallband der Streifen in eine Stanzeinrichtung und Prägeeinrichtung gezogen wird und der Schlitz 3 zunächst mittels eines Werkzeugs derart in die Fläche eingeprägt wird, dass das Material des Metallplättchens 2 in dem zu erstellenden Schlitzbereich 8 durch eine verformende Überdehnung gerissen wird, so dass die Seiten 5 und 6 des Schlitzes 4 Reißkanten 10 und 11 einnehmen.

## Patentansprüche

1. Auslöser, Aktivator bzw. Trigger oder dergleichen zum Einleiten einer Kristallisation einer wässrigen Salzlösung, wobei der Auslöser aus einem biegbaren relativ dünnen gewölbten Metallplättchen gebildet ist, mit wenigstens einem in die Fläche gestanzten Schlitz, dessen gegenüberliegende Seiten in einer ersten gewölbten Situation des Auslösers in Berührung stehen, und wobei durch Fingerdruck mit schnappender Versetzung gegen die Wölbung sich die Seiten des Schlitzes in einer zweiten Situation sich öffnen und dadurch den Kristallisationsprozes auslösen, **dadurch gekennzeichnet, dass** der Schlitz (4) mittels eines Werkzeugs derart in die Fläche (3) eingeprägt wird, dass das Material des Metallplättchens (2) im Schlitzbereich (8) durch eine verformende Überdehnung aufreißt oder anreißt, so dass die Seiten (5) und (6) des Schlitzes (4) Reißkanten (10) und (11) einnehmen.

2. Auslöser nach Anspruch 1, **dadurch gekennzeichnet, dass** Reißkanten (10) und (11) eine sägezahnförmige ausgefranzte Oberflächenstruktur einnehmen.

3. Auslöser nach Anspruch 2, **dadurch gekennzeichnet, dass** sich an der Oberflächenstruktur infolge des Reißens lose Metallfaserpartikel bilden und ablösen.

4. Auslöser nach den Ansprüchen 1 bis 3, **dadurch gekennzeichnet, dass** die Reißkanten (10) und (11) durch Rückversetzung des Metallplättchens (2) in die erste gewölbte Situation bringbar sind, wobei sich infolge der sich ergebenen auftretenden Reibung zwischen den Reißkanten (10) und (11) weitere Metallfaserpartikel bilden und ablösen.
